# EUROPÄISCHE PATENTSCHRIFT

(11) **EP 2 864 157 B1**
(45) Veröffentlichungstag und Bekanntmachung des Hinweises auf die Patenterteilung: **26.10.2022**
(21) Anmeldenummer: 13732429.9
(22) Anmeldetag: 20.06.2013
(51) Int. Cl.: B60Q 1/08, G06K 9/00, G06V 20/58

(54) **VERFAHREN ZUR AUTOMATISCHEN ANPASSUNG EINER FAHRZEUGBELEUCHTUNG AN EINE UMGEBUNG DES FAHRZEUGS, BELEUCHTUNGSVORRICHTUNG UND FAHRZEUG MIT BELEUCHTUNG**
METHOD FOR AUTOMATICALLY ADAPTING VEHICLE LIGHTING TO A SURROUNDING AREA OF A VEHICLE, LIGHTING APPARATUS AND VEHICLE HAVING LIGHTING
PROCÉDÉ D'ADAPTATION AUTOMATIQUE D'UN ÉCLAIRAGE DE VÉHICULE À UN ENVIRONNEMENT DU VÉHICULE, DISPOSITIF D'ÉCLAIRAGE ET VÉHICULE DOTÉ DE CET ÉCLAIRAGE

(30) Priorität: 21.06.2012 DE 102012210467
(43) Veröffentlichungstag der Anmeldung: 29.04.2015
(73) Patentinhaber: Bayerische Motoren Werke Aktiengesellschaft, 80809 München (DE)
(72) Erfinder: STROLZ, Michael, 80809 München (DE); TILLE, Thomas, 81249 Muenchen (DE); WEIDHAAS, Stefan, 85241 Hebertshausen (DE)
(86) Internationale Anmeldenummer: PCT/EP2013/062915
(87) Internationale Veröffentlichungsnummer: WO 2013/190055

(56) Entgegenhaltungen:
- EP-A1- 2 127 944
- EP-A1- 2 275 305
- WO-A1-2009/112910
- DE-A1- 19 852 631
- DE-A1-102007 048 717
- DE-A1-102011 004 937

## Beschreibung

Die Erfindung betrifft ein Verfahren zur automatischen Anpassung einer Fahrzeugbeleuchtung an eine Umgebung des Fahrzeugs, insbesondere wenn in der Umgebung des Fahrzeugs Verkehrsschilder vorhanden sind, sowie eine Beleuchtungsvorrichtung für ein Fahrzeug, die zur Beleuchtung von Verkehrsschildern geeignet ist.

Bei Nachtfahrten kommt einer Beleuchtungsvorrichtung eines Fahrzeugs für einen Fahrer in Bezug auf Sicherheit und Fahrkomfort eine besondere Bedeutung zu. Fernlicht-Assistenz-Systeme (FLA) ermöglichen bereits eine selektive und adaptive Ausleuchtung der Fahrbahn. Die bisher bekannten Fernlicht-Assistenz-Systeme bieten allerdings keine Funktionalität, um einen Fahrer vor einer unangenehmen und gefährlichen Blendung infolge einer starken Reflexion von Licht an Verkehrsschildern zu schützen. Insbesondere bei Nachtfahrten mit Fernlicht kann eine Reflexion von Eigenlicht an Verkehrsschildern zu einer starken Blendung und somit zu einer risikoreichen Sichtbehinderung des Fahrers führen.

Im Fall einer Blendung durch Reflexion von Eigenlicht des Fahrzeugs an Verkehrsschildern kann ein Fahrer derzeit lediglich über (manuelle) Veränderungen des Lichts, zum Beispiel durch Umschalten auf Abblendlicht, die Blendung reduzieren beziehungsweise begrenzen. Bisher bekannte Fernlicht-Assistenz-Systeme bieten keine Funktionalität, um dem Fahrer diesen Arbeitsschritt abzunehmen. Stattdessen stellen Fernlicht-Assistenz-Einrichtung Informationen bereit, ob beispielsweise in der Umgebung des eigenen Fahrzeugs ein entgegenkommendes Fahrzeug oder ein vorausfahrendes Fahrzeugs vorhanden ist oder ob das eigene Fahrzeug sich in einer beleuchteten Ortschaft befindet. Diese von einer Fernlicht-Assistenz-Einrichtung bereitgestellten Informationen ermöglichen lediglich ein automatisiertes Deaktivieren des Fernlichts für Szenarien mit entgegenkommenden beziehungsweise vorausfahrenden Fahrzeugen oder in beleuchteten Orten.

Die Blendung eines Fahrers durch Reflexion von Licht an reflektierenden Verkehrsschildern wird von einem Fahrer nicht nur als unangenehm wahrgenommen. Die Lichtblendung stellt auch ein erhöhtes Gefahrenpotential bei Nachtfahrten, bei denen das Unfallpotential ohnehin schon aufgrund von eingeschränkter Sicht, Wildwechsel oder Glätte, besonders hoch ist, dar. Die Blendung eines Fahrers durch Fernlicht-Reflexion an einem Verkehrsschild kann zu spätem oder falschem Reagieren in Gefahrensituationen führen. Ein manuelles Umschalten von Fernlicht auf Abblendlicht ist zeitintensiv, was dazu führt, dass die Blendung faktisch länger anhält. Andererseits führt zu langes Deaktivieren des Fernlichts ebenfalls zu einem erhöhten Risiko, da die Ausleuchtung der Fahrbahn während diesem Zeitraum nicht mehr optimal ist.

Verfahren und Vorrichtungen zur automatischen Anpassung einer Fahrzeugbeleuchtung an eine Umgebung des Fahrzeugs sind aus EP 2127944 A1, EP 2275305 A1, DE 102007048717 A1 und WO 2009/112910 A1 bekannt. In DE 19852631 A1 ist eine Vorrichtung und ein Verfahren zur Verkehrszeichenerkennung beschrieben.

Es ist wünschenswert, ein Verfahren zur automatischen Anpassung einer Fahrzeugbeleuchtung an eine Umgebung des Fahrzeugs anzugeben, durch das Reflexionen von Eigenlicht des Fahrzeugs an Verkehrsschildern vermieden oder zumindest weitestgehend reduziert werden können. Des Weiteren besteht ein Bedarf eine Beleuchtungsvorrichtung für ein Fahrzeug anzugeben, durch die es ermöglicht wird, Reflexion von Eigenlicht des Fahrzeugs an Verkehrsschildern zu vermeiden oder zumindest weitestgehend zu reduzieren.

Eine Ausführungsform eines Verfahrens zur automatischen Anpassung einer Fahrzeugbeleuchtung an eine Umgebung des Fahrzeugs ist im Patentanspruch 1 angegeben.

Gemäß dem vorgeschlagenen Verfahren wird bei Fahrten im Dunkeln, sofern dabei eine starke Reflexion des eigenen Fahrzeuglichts durch Verkehrsschilder auftritt, die Ausleuchtung automatisiert durch einen (Fern-)Lichtassistent so angepasst, dass die Reflexion reduziert wird und somit der Fahrer nicht mehr signifikant geblendet wird. Dies führt zu höherem Fahrkomfort und höherer Sicherheit. Eine erhöhte Blendung eines Fahrers, die dadurch zustande kommt, dass Verkehrsschilder mit sehr hoher Reflektanz das Scheinwerferlicht zum Auge des Fahrers zurückleiten, kann durch eine gezielte, eventuell partielle Reduzierung der Scheinwerfer-Helligkeit reduziert werden.

Ein Bild der beleuchteten Umgebung des Fahrzeugs wird aufgenommen.

In dem aufgenommen Bild werden dominante Strahlenquellen lokalisiert und hinsichtlich Reflexion klassifiziert. Daneben oder zusätzlich kann eine Verkehrsschild-Erkennung genutzt werden. Eine derartige Verkehrszeichen-Erkennung kann beispielsweise von heute bereits üblichen kamerabasierten Fahrassistenzsystemen bereitgestellt werden. Solche kamerabasierten Fahrassistenzsysteme verfügen in der Regel gleichzeitig über mehrere Funktionalitäten. Neben einer Lichterkennung zur automatischen Aktivierung/Deaktivierung des Fernlichts und der adaptiven Steuerung der Lichtverteilung ist oft auch eine Erkennung von Verkehrsschildern vorhanden. Diese Verkehrsschilderkennung wird zum Beispiel dazu genutzt, um dem Fahrer das aktuell gültige Tempolimit anzuzeigen.

Mittels einer solchen Verkehrsschild-Erkennung können zum Beispiel die folgenden wesentlichen Eigenschaften erfasst werden: Schilderklasse, Schildergröße, Reflektanz, Schildertyp und die Position eines Verkehrsschildes bezogen auf ein Fahrzeugkoordinatensystem. Der Schildertyp und die Position des Schildes bezogen auf das Fahrzeugkoordinatensystem können beispielsweise durch eine im Fahrzeug eingebaute Kamera erkannt werden. Über einen Helligkeitswert im Bild kann bei bekannter Umgebungshelligkeit und bekannter Helligkeit des Scheinwerferlichts des Fahrzeugs auch die Reflektanz bestimmt werden. Mit diesen Informationen kann der Fahrzeugscheinwerfer gezielt derart angesteuert werden, dass genau an der Position, an der sich das Verkehrsschild in der Umgebungsszenerie befindet, die Helligkeit der eigenen Fahrzeugbeleuchtung gezielt reduziert wird.

Die Beleuchtungseinrichtung des Fahrzeugs, insbesondere die Fahrzeugscheinwerfer, können derart angesteuert werden, dass in der sonstigen Umgebung und auf der Straße die volle Helligkeit des Scheinwerfers erhalten bleibt, sodass es zu keiner Sichteinschränkung des Fahrers kommt. Hingegen wird ein am Straßenrand stehendes Verkehrsschild nun mit einer geringen Helligkeit des Scheinwerfers angestrahlt. Das von der Beleuchtungseinrichtung in Richtung auf das Verkehrsschild emittierte Licht wird somit gezielt verändert beziehungsweise in seiner Helligkeit reduziert. Dadurch erscheint das Verkehrsschild für den Fahrer nicht mehr so hell und eine Blendung durch das Verkehrsschild wird deutlich verringert, wohingegen die übrige Szenerie weiterhin mit voller Lichtintensität ausgeleuchtet wird.

Eine Beleuchtungsvorrichtung für ein Fahrzeug zur Reduzierung einer Reflexion von Eigenlicht an Verkehrsschildern ist im Patentanspruch 7 angegeben.

Durch ein derartiges Verfahren und die dazugehörige Beleuchtungsvorrichtung kann der Fahrkomfort bei Nacht- und Abendfahrten erhöht werden. Des Weiteren wird die Fahrsicherheit erhöht und das Unfallrisiko verringert, da die Beleuchtungsvorrichtung schneller und effektiver als ein Mensch schaltet. Insbesondere erfolgt ein schnelleres Wiedereinschalten der Beleuchtung auf volle Helligkeit und somit eine optimale Ausnutzung des Fernlichts. In Kombination mit einem entsprechenden Scheinwerfer-System, beispielsweise einem Matrix-Scheinwerfer, sind die Herstellungskosten der Beleuchtungsvorrichtung vergleichsweise gering und es tritt keine signifikante Gewichts-Mehrung auf.

Die Erfindung wird im Folgenden anhand von Figuren, die Ausführungsbeispiele der vorliegenden Erfindung zeigen, näher erläutert. Es zeigen:
- Figur 1: ein Signalflussplan einer Realisierungsmöglichkeit eines reflexionsreduzierenden Fernlichtassistenten,
- Figur 2A: eine nicht-erfindungsgemäße Ausführungsform eines Verfahrens zur automatischen Anpassung einer Fahrzeugbeleuchtung an eine Umgebung des Fahrzeugs
- Figur 2B: eine nicht-erfindungsgemäße Ausführungsform einer Beleuchtungsvorrichtung für ein Fahrzeug zur Anpassung einer Fahrzeugbeleuchtung an eine Umgebung des Fahrzeugs,
- Figur 3A: eine erfindungsgemäße Ausführungsform eines Verfahrens zur automatischen Anpassung einer Fahrzeugbeleuchtung an eine Umgebung des Fahrzeugs,
- Figur 3B: eine erfindungsgemäße Ausführungsform einer Beleuchtungsvorrichtung für ein Fahrzeug zur Anpassung einer Fahrzeugbeleuchtung an eine Umgebung des Fahrzeugs,
- Figur 4A: eine nicht-erfindungsgemäße Ausführungsform eines Verfahrens zur automatischen Anpassung einer Fahrzeugbeleuchtung an eine Umgebung des Fahrzeugs,
- Figur 4B: eine nicht-erfindungsgemäße Ausführungsform einer Beleuchtungsvorrichtung für ein Fahrzeug zur Anpassung einer Fahrzeugbeleuchtung an eine Umgebung des Fahrzeugs,
- Figur 5: eine Ausführungsform einer Beleuchtungseinrichtung für ein Fahrzeug.

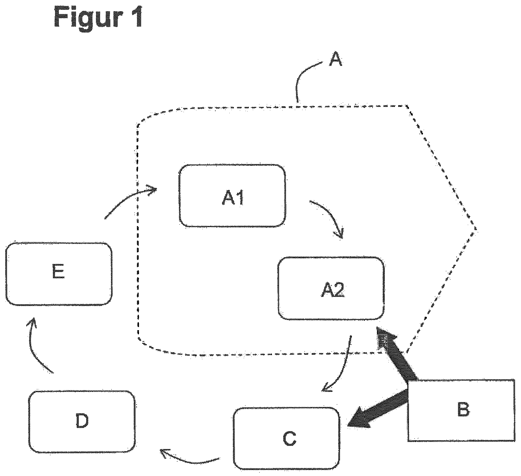

Figur 1 zeigt eine Realisierungsmöglichkeit eines Verfahrens zur automatischen Anpassung einer Fahrzeugbeleuchtung an eine Umgebung eines Fahrzeugs, das beispielsweise mittels eines Reflexions-reduzierenden Fernlichtassistenten realisiert werden kann.

In einem Schritt A kann beispielsweise die aktuell vorherrschende Leuchtsituation im Sichtbereich des Fahrers erfasst und analysiert werden. Der Schritt A umfasst die Teilschritte A1 und A2. Im Teilschritt A1 erfolgt die Erfassung der Leuchtsituation. Dazu kann beispielsweise mittels einer Kamera oder eines Sensors ein Bild im Sichtbereich des Fahrers erfasst werden. Im Teilschritt A2 erfolgt die Auswertung der Leuchtsituation in dem aufgenommenen Bild bezüglich der im Bild vorhandenen Reflexionen.

Zusätzlich zu dem Verfahrensschritt A kann ein Verfahrensschritt B ausgeführt werden, in dem Informationen über Ort und Art von Verkehrsschildern im ausgeleuchteten Bereich der Fahrzeugumgebung bereitgestellt und für den weiteren Verfahrensablauf verwendet werden. Die Informationen über Ort und Art von Verkehrsschildern im aktuellen Sichtbereich eines Fahrers können von verschiedenen Informationsquellen bereitgestellt werden. Es kann dazu beispielsweise auf Kartenmaterial (offline), beispielsweise von einer digitalen Karte, auf Internet-Datenbanken (Google etc.) oder auf eine im Fahrzeug bereits vorhandene Verkehrszeichen-Erkennung zurückgegriffen werden.

Nachdem durch Erfassung und Auswertung der Leuchtsituation (Verfahrensschritt A) und durch Verwendung von bereits vorhandenen Informationen über Ort und Art von Verkehrsschildern (Verfahrensschritt B) die Position und Art von Verkehrsschildern im ausgeleuchteten Scheinwerferbereich des Fahrzeugs ermittelt worden sind, wird in einem Verfahrensschritt C eine verbesserte Ausleuchtung der Szenerie bestimmt. Die Ausleuchtung wird dahingehend optimiert, dass Reflexionen an Verkehrsschildern gezielt reduziert werden. Dazu muss die Lichtemission der Beleuchtungseinrichtung des Fahrzeugs in Richtung auf ein Verkehrsschild verändert werden.

Dies kann beispielsweise dadurch geschehen, indem bei einem LED-Scheinwerfer einzelnen LEDs, die Licht in Richtung auf das Verkehrsschild abstrahlen, in ihrer Helligkeit reduziert werden. In einem Verfahrensschritt D erfolgt eine Berechnung von entsprechenden Steuersignalen zur Steuerung eines Scheinwerfersystems. Durch geeignete Ansteuerung des Scheinwerfersystems kann in einem Verfahrensschritt E die Emission von Licht in Richtung auf das Verkehrsschild gezielt beeinflusst werden, sodass Reflexionen an Verkehrsschildern unterdrückt oder zumindest deutlich reduziert werden.

Die Scheinwerfereinstellung kann als eine Steuerung oder als eine adaptive Regelung ausgeführt sein. Im Falle einer Scheinwerferregelung werden nach dem ersten Einstellen der Scheinwerfer die oben genannten Verfahrensschritte wiederholt und somit die Scheinwerfer eventuell nochmals nachjustiert.

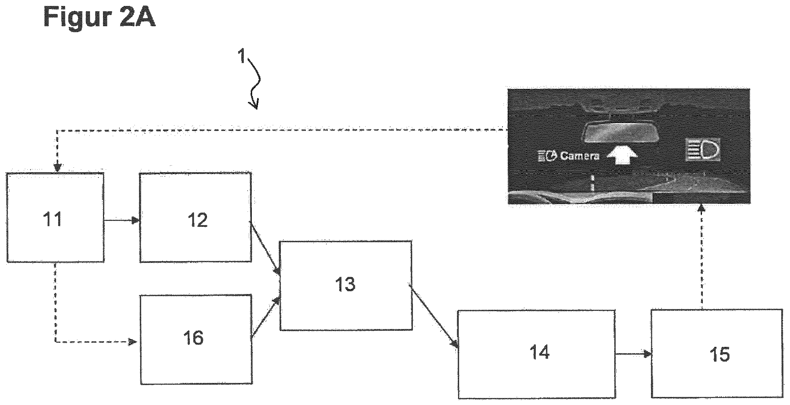

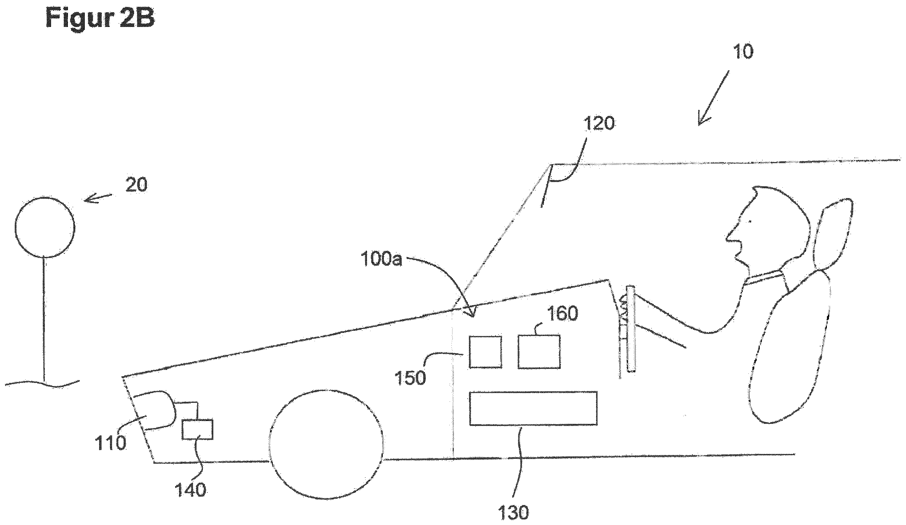

Figur 2A zeigt eine nicht-erfindungsgemäße Ausführungsform 1 eines Verfahrens zur automatischen Anpassung einer Fahrzeugbeleuchtung an eine Umgebung des Fahrzeugs. Dabei handelt es sich um eine Ausleuchtungs-Regelung ohne explizite Verkehrsschild-Informationen. Figur 2B zeigt ein Fahrzeug 10 in einer Umgebung mit einem Verkehrsschild 20. Das Fahrzeug umfasst eine Ausführungsform 100a einer Beleuchtungsvorrichtung zur Ausführung des Verfahrens.

Die Beleuchtungsvorrichtung 100a umfasst eine Beleuchtungseinrichtung 110 zum Emittieren von Licht zur Beleuchtung einer Umgebung des Fahrzeugs 10. Die Beleuchtungseinrichtung 110 kann beispielsweise als ein Scheinwerfer zur Beleuchtung einer Szenerie im Frontbereich des Fahrzeugs 10 ausgebildet sein. Gemäß dem in Figur 2A gezeigten Verfahrensablauf wird zunächst in einem Verfahrensschritt 11 ein Bild 30 der Szenrie der Umgebung des Fahrzeugs ermittelt. Die Beleuchtungsvorrichtung 100a weist dazu eine Aufnahmeeinrichtung 120 zum Aufnehmen eines Bildes der Umgebung des Fahrzeugs auf. Die Aufnahmeeinrichtung 120 kann beispielsweise als ein Sensor und/oder eine Kamera ausgebildet sein.

In einem Verfahrensschritt 12 werden dominante Strahlenquellen in dem Bild 30 lokalisiert. Die dominanten Strahlenquellen werden an denjenigen Stellen in dem Bild 30 lokalisiert, an denen die jeweilige Lichtintensität der Strahlenquellen höher als an anderen Stellen im Bild ist. Die Beleuchtungsvorrichtung umfasst zum Ermitteln von Lichtintensitäten in dem Bild 30 eine Lichtintensität-Ermittlungseinrichtung 150. Des Weiteren ist eine Auswerteeinrichtung 130 vorgesehen, die dazu ausgebildet ist, dominante Strahlenquellen an Stellen in den Bild 30 zu lokalisieren, wenn dort die jeweiligen Lichtintensitäten höher als an anderen Stellen in dem Bild 30 sind.

In einem Verfahrensschritt 13 werden die in den Bild 30 lokalisierten dominanten Strahlenquellen hinsichtlich Reflexion des von der Beleuchtungseinrichtung 110 emittierten Lichts klassifiziert. Die Klassifizierung erfolgt in Abhängigkeit von der jeweiligen Lichtintensität der Strahlungsquellen in dem aufgenommenen Bild, so dass dominante Strahlenquellen identifiziert werden können, die von mehr oder weniger reflektierenden Objekten in der Umgebung des Fahrzeugs herrühren. Die Auswerteeinrichtung 130 ist dazu ausgebildet, die in dem Bild 30 lokalisierten dominanten Strahlenquellen hinsichtlich Reflexion des von der Beleuchtungseinrichtung 110 emittierten Lichts zu klassifizieren. Anhand der Klassifizierung kann von der Auswerteeinrichtung 130 festgestellt werden, ob die dominante Strahlenquelle von der Reflexion von Eigenlicht an einem Verkehrsschild herrührt und somit ob in der Umgebung des Fahrzeugs ein Verkehrsschild vorhanden ist. Die Auswerteeinrichtung kann durch Auswerten des aufgenommenen Bildes auch die Position eines Verkehrsschildes 20 in der Fahrzeugumgebung ermitteln.

Gemäß einer möglichen Ausführungsform kann die Auswerteeinrichtung in dem aufgenommenen Bild Bereiche ermitteln, an denen Leuchterscheinungen vorhanden sind, die von einer Reflexion herrühren und/oder deren Helligkeit über einem bestimmten Lichtintensitäts- beziehungsweise Grauwert liegen. Gemäß einer weiteren möglichen Ausführungsform kann von der Auswerteeinrichtung in dem aufgenommenen Bild mittels einer Bildverarbeitung die Schilderform und/oder der Schildertyp und/oder auch die Reflektanz des Verkehrsschildes erkannt werden.

Optional kann die Beleuchtungsvorrichtung 100a eine Fernlicht-Assistenz-Einrichtung 160 aufweisen. Die Fernlicht-Assistenz-Einrichtung 160 kann beispielsweise Informationen bezüglich eines entgegenkommenden beleuchteten Fahrzeugs oder eines voranfahrenden beleuchteten Fahrzeuges bereitstellen. Die Informationen der Fernlicht-Assistenz-Einrichtung 160 können optional in einem Verfahrensschritt 16 ausgewertet und bei der Klassifizierung der Strahlenquellen im Verfahrensschritte 13 berücksichtigt werden. Die Auswerteeinrichtung 130 kann dazu ausgebildet sein, die dem Bild 30 lokalisierten dominanten Strahlenquellen in Abhängigkeit von den von der Fernlicht-Assistenz-Einrichtung 160 bereitgestellten Informationen zu klassifizieren.

Wenn das Vorhandensein eines Verkehrsschildes und seine Position im aufgenommenen Bild von der Auswerteeinrichtung 130 ermittelt worden ist, kann in einem Verfahrensschritt 14 bestimmt werden, wie das von der Beleuchtungseinrichtung 110 zu emittierende Licht zu verändern ist. Das Verändern des Lichts erfolgt insbesondere durch ein Reduzieren beziehungsweise Dimmen der Helligkeit des Lichts. Das von der Beleuchtungseinrichtung 110 emittierte Licht wird dabei derart verändert, dass eine Reflexion des emittierten Lichts an dem Verkehrsschild 20 im Sichtbereich des Fahrers reduziert wird. Im Verfahrensschritt 14 werden dabei insbesondere die zu dimmenden Ausleuchtbereiche der Beleuchtungseinrichtung 110 bestimmt, so dass das von der Beleuchtungseinrichtung 110 in Richtung auf das Verkehrsschild emittierte Licht in seiner Helligkeit reduziert wird, während die übrigen Bereiche in der Umgebung des Fahrzeugs von der Beleuchtungseinrichtung weiterhin mit hoher Lichtintensität ausgeleuchtet bleiben. Die Ansteuerung des Scheinwerfersystems mit entsprechenden Steuersignalen erfolgt im Verfahrensschritt 15 durch eine Steuereinrichtung 140.

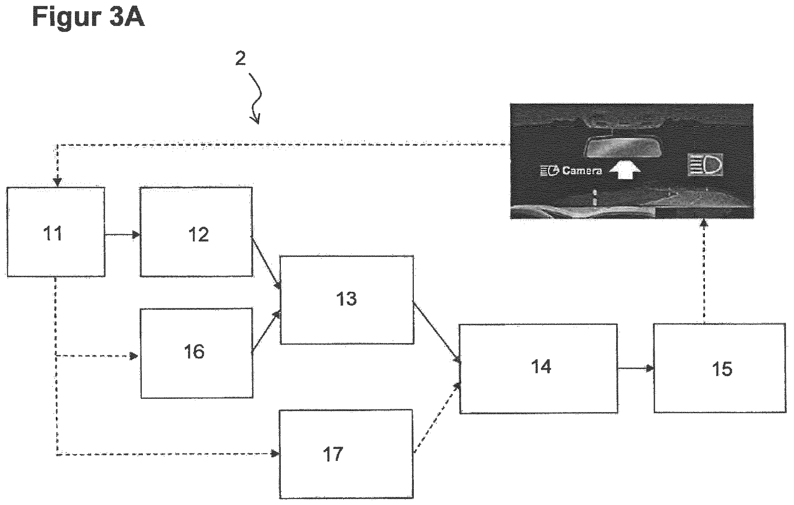

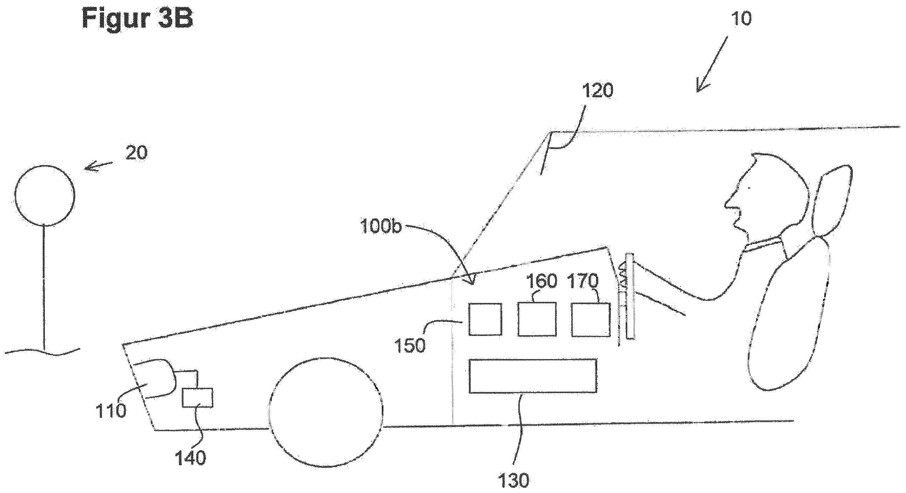

In Figur 3A ist eine erfindungsgemäße Ausführung 2 eines Verfahrens zur automatischen Anpassung einer Fahrzeugbeleuchtung an eine Umgebung des Fahrzeugs zum Reduzieren von Lichtreflexionen an Verkehrsschildern gezeigt. Figur 3B zeigt eine dazugehörige Ausführungsform 100b einer Beleuchtungsvorrichtung für ein Fahrzeug. Während die in Figur 2A illustrierte Ausleuchtungs-Regelung ohne explizite Verkehrsschild-Informationen erfolgt, zeigt Figur 3A eine Ausleuchtungs-Regelung auf Basis expliziter Verkehrsschild-Informationen. In den Figuren 2A, 2B und 3A, 3B sind korrespondierende Verfahrensschritte beziehungsweise Einrichtungen der Beleuchtungsvorrichtung mit gleichen Bezugszeichen versehen. Im Folgenden wird lediglich auf die Unterschiede zu dem in Figur 2A dargestellten Verfahren und der in Figur 2B dargestellten Ausführungsform der Beleuchtungsvorrichtung eingegangen.

Bei der Ausführungsform 2 des Verfahrens zur automatischen Anpassung einer Fahrzeugbeleuchtung an eine Umgebung des Fahrzeugs werden zur Bestimmung der zu dimmenden Ausleuchtebereiche (Verfahrensschritt 14) neben den Informationen aus der Klassifizierung der Strahlenquellen hinsichtlich Reflexion (Verfahrensschritt 13) in einem nunmehr zusätzlichen Verfahrensschritt 17 Verkehrsschild-Informationen für ein in der aufgenommenen Szenerie vorhandenes Verkehrsschild bereitgestellt. Die Verkehrsschild-Informationen umfassen beispielsweise Informationen in Bezug auf das Vorhandensein eines Verkehrsschildes und/oder die Position und/oder die Schilderklasse und/oder die Schildergröße und/oder die Reflektanz des Verkehrsschildes. Die Verkehrsschild-Informationen können beispielsweise aus Kartenmaterial, beispielweise einer digitalen Karte, aus Datenbanken (Internet-Datenbanken, Google, etc.) oder, in einer nicht-erfindungsgemäßen Ausführungsform, durch eine kamerabasierte Verkehrsschild-Erkennung bereitgestellt werden.

Im Falle einer kamerabasierten Verkehrsschild-Erkennung kann die Beleuchtungsvorrichtung 100b, wie anhand von Figur 3B veranschaulicht ist, eine Verkehrszeichen-Erkennungseinrichtung 170 zum Bereitstellen der Verkehrsschild-Informationen aufweisen. Eine derartige Verkehrsschilderkennung kann beispielsweise durch eine kamerabasierte Erkennung erfolgen. Hierzu können kamerabasierte Fahrassistenzsysteme eingesetzt werden.

Mittels der Verkehrszeichen-Erkennungseinrichtung 170 kann festgestellt werden, ob in der ausgeleuchteten Umgebung des Fahrzeugs ein Verkehrszeichen vorhanden ist. Weitere Verkehrsschild-Informationen, beispielsweise Informationen bezüglich der Position des Verkehrsschildes und/oder der Schilderklasse und/oder der Reflektanz des Verkehrsschildes können von der Verkehrszeichen-Erkennungseinrichtung 170 bereitgestellt werden. Anhand der Klassifizierung der dominanten Strahlenquellen hinsichtlich Reflexion und anhand der Verkehrschild-Informationen können im Verfahrensschritt 14 die in ihrer Helligkeit zu reduzierenden beziehungsweise die zu dimmenden Ausleuchtbereiche der Beleuchtungseinrichtung 110 bestimmt werden, so dass Reflexionen von Eigenlicht an einem Verkehrsschild vermieden oder zumindest reduziert werden können.

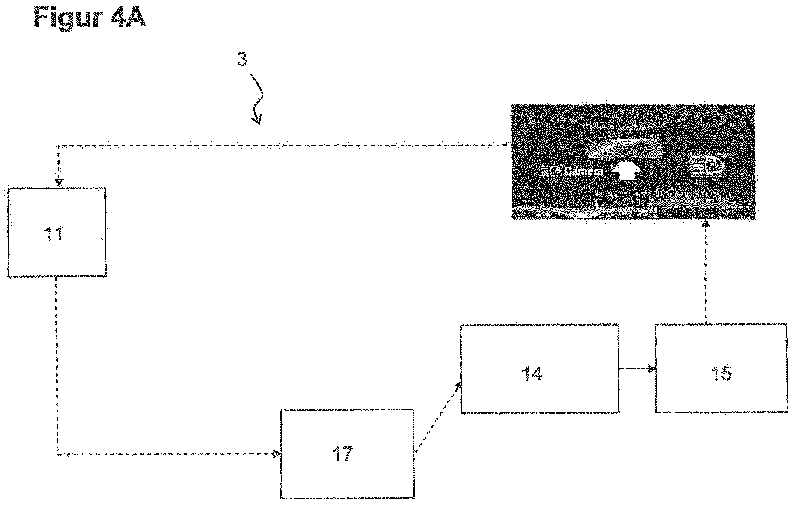

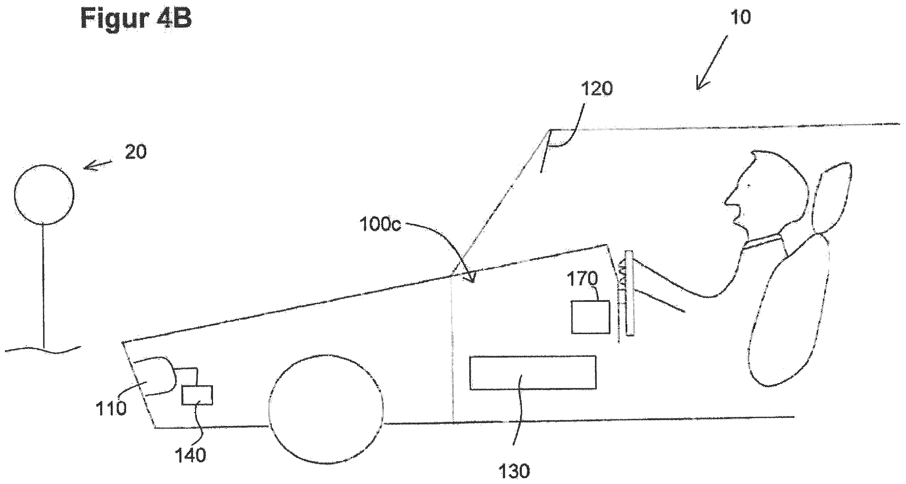

Figur 4A zeigt eine nicht-erfindungsgemäße Ausführungsform eines Verfahrens 3 zur automatischen Anpassung einer Fahrzeugbeleuchtung an eine Umgebung des Fahrzeugs. Figur 4B zeigt die dazugehörige Ausführungsform einer Beleuchtungsvorrichtung für ein Fahrzeug. Im Unterschied zu den in den Figuren 2A und 3A gezeigten Regelungen ist in Figur 4A eine Ausleuchtungs-Steuerung auf Basis expliziter Verkehrsschild-Informationen gezeigt.

In einem Verfahrensschritt 11 wird von einem Sensor und/oder einer Kamera ein Bild 30 der Szenerie der Umgebung des Fahrzeugs ermittelt. Im Unterschied zu den in Figur 2A und 3A gezeigten Verfahren erfolgen keine Lokalisierung von dominanten Strahlenquellen und auch keine Auswertung von Reflexionserscheinungen in dem aufgenommenen Bild. Stattdessen erfolgt lediglich der im Verfahren 2 bereits vorhandene Verfahrensschritt 17, in dem Verkehrsschild-Informationen, insbesondere Informationen in Bezug auf das Vorhandensein eines Verkehrsschildes sowie die Position und/oder die Schilderklasse und/oder die Schildergröße und/oder die Reflektanz des Verkehrsschildes bereitgestellt werden. Die Verkehrsschild-Informationen können beispielsweise durch eine kamerabasierte Verkehrszeichen-Erkennung oder aus vorhandenem Kartenmaterial oder aus Datenbanken ermittelt werden.

Die Verkehrsschild-Informationen können in einem nachfolgenden Verfahrensschritt 13 zur Bestimmung der zu verändernden, insbesondere der zu dimmenden, Ausleuchtebereiche der Beleuchtungseinrichtung 110 verwendet werden. Die Steuereinrichtung 130 steuert die Beleuchtungseinrichtung 110 in Abhängigkeit von den Verkehrsschild-Informationen derart an, dass das emittierte Licht und insbesondere die Helligkeit des emittierten Lichts an der ermittelten Position des Verkehrsschildes verändert wird, sodass gezielt Reflexionen an dem Verkehrsschild vermieden oder weitestgehend reduziert werden.

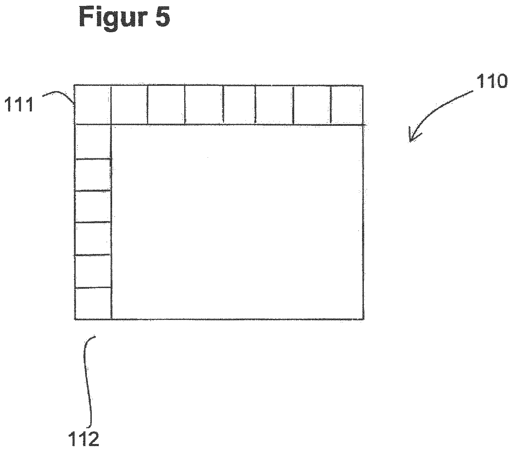

Wenn die Auswerteeinrichtung 130 festgestellt hat, dass in der Umgebung des Fahrzeugs ein Verkehrsschild vorhanden ist, erzeugt die Steuereinrichtung 140 Steuersignale zum Verändern des von der Beleuchtungseinrichtung 110 in Richtung auf das Verkehrsschild zu emittierenden Lichts, so dass eine Reflexion des emittierten Lichts an dem Verkehrsschild vermieden oder zumindest reduziert wird. Die Beleuchtungseinrichtung 110 kann beispielsweise als ein Scheinwerfer, insbesondere als ein LED(light emitting diode)-Scheinwerfer ausgebildet sein. Ein derartiger Scheinwerfer, bei dem die einzelnen LEDs in Zeilen 111 und Spalten 112 matrixförmig angeordnet sind, ist in Figur 5 dargestellt.

Nachdem ermittelt worden ist, welche LEDs in dem Zeilen-/Spaltenarray Licht mit geringerer Lichtintensität beziehungsweise Helligkeit abstrahlen sollen, um Reflexionen von Eigenlicht an dem Verkehrsschild 20 zu reduzieren, steuert die Steuereinrichtung 140 die Beleuchtungseinrichtung 110 mit entsprechenden Steuersignalen an. Die Ansteuerung der einzelnen LEDs kann selektiv erfolgen.

Eine Reduzierung der Helligkeit erfolgt nur, wenn die Helligkeit des emittierten Lichts über einem Schwellwert liegt. Dadurch wird sichergestellt, dass die Ausleuchtung stets auf einem ausreichend hohen Niveau bleibt, sodass in der Szenerie vorhandene Verkehrszeichen weiterhin zumindest mit geringer Intensität beleuchtet werden. Dadurch ist gewährleistet, dass die Beleuchtungsvorrichtung gesetzes- und sicherheitskonform arbeitet.

### Bezugszeichenliste

- 10: Fahrzeug
- 20: Verkehrsschild
- 30: aufgenommenes Bild
- 100a, 100b, 100c: Ausführungsformen einer Beleuchtungsvorrichtung
- 110: Beleuchtungseinrichtung
- 120: Aufnahmeeinrichtung
- 130: Auswerteeinrichtung
- 140: Steuereinrichtung
- 150: Lichtintensitäts-Ermittlungseinrichtung
- 160: Fernlicht-Assistenz-Einrichtung
- 170: Verkehrszeichen-Erkennungseinrichtung

## Patentansprüche

1. Verfahren zur automatischen Anpassung einer Fahrzeugbeleuchtung an eine Umgebung des Fahrzeugs, umfassend:
- Beleuchten der Umgebung des Fahrzeugs mittels einer Beleuchtungseinrichtung (110) des Fahrzeugs (10),
- Ermitteln eines Bildes (30) der Umgebung des Fahrzeugs,
- Ermitteln von Lichtintensitäten in dem aufgenommenen Bild (30),
- Lokalisieren von dominanten Strahlenquellen an Stellen in dem Bild (30), wenn jeweilige Lichtintensitäten der Strahlenquellen an den Stellen höher als an anderen Stellen in dem Bild (30) sind,
- Klassifizieren der in dem Bild (30) lokalisierten dominanten Strahlenquellen hinsichtlich Reflexion des von der Beleuchtungseinrichtung (110) emittierten Lichts, wobei die Klassifizierung in Abhängigkeit von der jeweiligen Lichtintensität der Strahlungsquellen in dem Bild (30) erfolgt,
- Feststellen, ob eine der im Bild (30) lokalisierten dominanten Strahlenquellen von der Reflexion von Eigenlicht der Beleuchtungseinrichtung (110) des Fahrzeugs an einem Verkehrsschild (20) herrührt und somit ob ein Verkehrsschild (20) im Bild (30) der Umgebung des Fahrzeugs vorhanden ist,
- Ermitteln der Position des Verkehrsschildes (20) in der Umgebung des Fahrzeugs durch Auswerten des Bildes (30), wenn festgestellt worden ist, dass das Verkehrsschild (20) als dominante Strahlenquelle im Bild (30) der Umgebung des Fahrzeugs vorhanden ist,
- Bereitstellen (17) von Verkehrsschild-Informationen aus Kartenmaterial einer digitalen Karte oder aus Datenbanken für ein in der aufgenommenen Szenerie vorhandenes Verkehrsschild (20),
- in Abhängigkeit von der Klassifizierung der dominanten Strahlenquellen hinsichtlich Reflexion und von den Verkehrsschild-Informationen, Verändern eines von der Beleuchtungseinrichtung (110) des Fahrzeugs (10) emittierten Lichts in Richtung auf die ermittelte Position des Verkehrsschildes (20) in der Umgebung des Fahrzeugs (10) derart, dass eine Reflexion des emittierten Lichts an dem Verkehrsschild reduziert wird, wenn festgestellt worden ist, dass im Bild (30) der Umgebung des Fahrzeugs ein Verkehrsschild (20) als dominante Strahlenquelle vorhanden ist.

2. Verfahren nach Anspruch 1, umfassend:
- Auswerten von Informationen bezüglich eines entgegenkommenden Fahrzeugs oder eines vorausfahrenden Fahrzeugs von einer Fernlicht-Assistenz-Einrichtung (140),
- Klassifizieren der in dem Bild (30) lokalisierten Strahlenquellen in Abhängigkeit von den Informationen der Fernlichtassistenz-Einrichtung (130).

3. Verfahren nach einem der Ansprüche 1 oder 2,
wobei die Verkehrsschild-Informationen Informationen in Bezug auf das Vorhandensein eines Verkehrsschildes und die Position und/oder die Schilderklasse und/oder die Schildergröße und/oder die Reflektanz des Verkehrsschildes umfassen.

4. Verfahren nach einem der Ansprüche 1 bis 3, umfassend
- Ermitteln der Lichtintensität an der in dem Bild (30) lokalisierten Stelle des Verkehrsschildes (20),
- Verändern des von der Beleuchtungseinrichtung (110) emittierten Lichts in Richtung auf die ermittelten Position des Verkehrsschildes (20) bis die Lichtintensität an der in dem Bild (30) lokalisierten Stelle des Verkehrsschildes (20) unter einen Schwellwert abfällt.

5. Verfahren nach einem der Ansprüche 1 bis 4, umfassend:
- Ermitteln eines Bereichs (111, 112) der Beleuchtungseinrichtung (110), in dem das zu emittierende Licht zu verändern ist, um eine Reflexion des von der Beleuchtungseinrichtung (110) emittierten Lichts an dem Verkehrsschild (20) zu reduzieren,
- Verändern des emittierten Lichts in dem ermittelten Bereich (111, 112) der Beleuchtungseinrichtung (110).

6. Verfahren nach einem der Ansprüche 1 bis 5,
Verändern des emittierten Lichts, insbesondere Reduzieren der Helligkeit des emittierten Lichts, derart, dass die Intensität des emittierten Lichts über einem Schwellwert liegt.

7. Beleuchtungsvorrichtung für ein Fahrzeug, umfassend:
- eine Beleuchtungseinrichtung (110) zum Emittieren von Licht zur Beleuchtung einer Umgebung des Fahrzeugs,
- eine Aufnahmeeinrichtung (120) zum Aufnehmen eines Bildes (30) der Umgebung des Fahrzeugs,
- eine Auswerteeinrichtung (130),
- eine Steuereinrichtung (140) zur Steuerung der Beleuchtungseinrichtung (110) des Fahrzeugs,
- eine Lichtintensitäts-Ermittlungseinrichtung (150) zum Ermitteln von Lichtintensitäten in dem Bild (30),
- wobei die Auswerteeinrichtung (130) dazu ausgebildet ist, dominante Strahlenquellen an Stellen in dem Bild (30) zu lokalisieren, wenn die jeweiligen Lichtintensitäten an den Stellen höher als an anderen Stellen in dem Bild (30) sind,
- wobei die Auswerteeinrichtung (130) dazu ausgebildet ist, die in dem Bild (30) lokalisierten Strahlenquellen hinsichtlich Reflexion des von der Beleuchtungseinrichtung (110) emittierten Lichts in Abhängigkeit von der jeweiligen Lichtintensität der Strahlungsquellen in dem Bild (30) zu klassifizieren,
- wobei die Auswerteeinrichtung (130) dazu ausgebildet ist, festzustellen, ob eine der im Bild (30) lokalisierten dominanten Strahlenquellen von der Reflexion von Eigenlicht der Beleuchtungseinrichtung (110) des Fahrzeugs (10) an einem Verkehrsschild (20) herrührt und somit ob ein Verkehrsschild (20) im Bild (30) der Umgebung des Fahrzeugs vorhanden ist,
- wobei die Auswerteeinrichtung (130) dazu ausgebildet ist, durch Auswerten des Bildes (30) die Position des Verkehrsschildes (20) in der Umgebung des Fahrzeugs zu ermitteln, wenn von der Auswerteeinrichtung (130) festgestellt worden ist, dass ein Verkehrsschild (20) als dominante Strahlenquelle im Bild (30) der Umgebung des Fahrzeugs vorhanden ist,
- wobei die Steuereinrichtung Zugriff auf Verkehrsschild-Informationen aus Kartenmaterial einer digitalen Karte oder aus Datenbanken für ein in der aufgenommenen Szenerie vorhandenes Verkehrsschild hat,
- wobei die Steuereinrichtung (140) dazu ausgebildet ist, in Abhängigkeit von der Klassifizierung der dominanten Strahlenquellen hinsichtlich Reflexion und von den Verkehrsschild-Informationen, die Beleuchtungseinrichtung (110) derart anzusteuern, dass das von der Beleuchtungseinrichtung (110) in Richtung auf das Verkehrsschild (20) emittierte Licht verändert wird, wodurch eine Reflexion des emittierten Lichts an dem Verkehrsschild (20) reduziert wird, wenn ermittelt worden ist, dass im Bild (30) der Umgebung des Fahrzeugs ein Verkehrsschild (20) als dominante Strahlenquelle vorhanden ist.

8. Beleuchtungsvorrichtung nach Anspruch 7, umfassend:
- eine Fernlicht-Assistenz-Einrichtung (160),
- wobei die Auswerteeinrichtung (130) dazu ausgebildet ist, die in dem Bild (30) lokalisierten dominanten Strahlenquellen in Abhängigkeit von den von der Fernlicht-Assistenz-Einrichtung (160) bereitgestellten Informationen bezüglich eines entgegenkommenden Fahrzeugs oder eines vorausfahrenden Fahrzeugs zu klassifizieren.

9. Kraftfahrzeug mit Beleuchtung, umfassend eine Beleuchtungsvorrichtung nach einem der Ansprüche 7 oder 8.

## Claims

1. Method for automatically adapting vehicle lighting to a surrounding area of the vehicle, comprising:
- lighting the surrounding area of the vehicle by means of a lighting device (110) of the vehicle (10),
- capturing an image (30) of the surrounding area of the vehicle,
- determining light intensities in the recorded image (30),
- localizing dominant radiation sources at points in the image (30) if respective light intensities of the radiation sources are higher at the points than at other points in the image (30),
- classifying the dominant radiation sources localized in the image (30) in terms of reflection of the light emitted by the lighting device (110), wherein the classification is performed in dependence on the respective light intensity of the radiation sources in the image (30),
- ascertaining whether one of the dominant radiation sources localized in the image (30) stems from the reflection of intrinsic light of the lighting device (110) of the vehicle at a traffic sign (20) and thus whether a traffic sign (20) is present in the image (30) of the surrounding area of the vehicle,
- determining the position of the traffic sign (20) in the surrounding area of the vehicle by evaluating the image (30) if it has been ascertained that the traffic sign (20) is present as dominant radiation source in the image (30) of the surrounding area of the vehicle,
- providing (17) traffic sign information from map material of a digital map or from databases for a traffic sign (20) that is present in the recorded scenery,
- in dependence on the classification of the dominant radiation sources in terms of reflection and on the traffic sign information, changing light emitted by the lighting device (110) of the vehicle (10) in the direction of the determined position of the traffic sign (20) in the surrounding area of the vehicle (10) in a manner such that a reflection of the emitted light at the traffic sign is reduced if it has been determined that a traffic sign (20) is present as dominant radiation source in the image (30) of the surrounding area of the vehicle.

2. Method according to Claim 1, comprising:
- evaluating information relating to an oncoming vehicle or a vehicle driving in front from a high beam assistant device (140),
- classifying the radiation sources localized in the image (30) in dependence on the information from the high beam assistant device (130).

3. Method according to either of Claims 1 and 2, wherein the traffic sign information comprises information relating to the presence of a traffic sign and the position and/or the sign category and/or the sign size and/or the reflectance of the traffic sign.

4. Method according to any of Claims 1 to 3, comprising
- determining the light intensity at the point on the traffic sign (20) localized in the image (30),
- changing the light emitted by the lighting device (110) in the direction of the determined position of the traffic sign (20) until the light intensity at the point of the traffic sign (20) localized in the image (30) drops to below a threshold value.

5. Method according to any of Claims 1 to 4, comprising:
- capturing a region (111, 112) of the lighting device (110) in which the light to be emitted is intended to be changed in order to reduce a reflection of the light emitted by the lighting device (110) at the traffic sign (20),
- changing the emitted light in the captured region (111, 112) of the lighting device (110).

6. Method according to any of Claims 1 to 5,
changing the emitted light, in particular reducing the brightness of the emitted light, in a manner such that the intensity of the emitted light lies above a threshold value.

7. Lighting apparatus for a vehicle, comprising:
- a lighting device (110) for emitting light for lighting a surrounding area of the vehicle,
- a recording device (120) for recording an image (30) of the surrounding area of the vehicle,
- an evaluation device (130),
- a control device (140) for controlling the lighting device (110) of the vehicle,
- a light intensity determination device (150) for determining light intensities in the image (30),
- wherein the evaluation device (130) is configured to localize dominant radiation sources at points in the image (30) if the respective light intensities are higher at the points than at other points in the image (30),
- wherein the evaluation device (130) is configured to classify the radiation sources localized in the image (30) in terms of reflection of the light emitted by the lighting device (110) in dependence on the respective light intensity of the radiation sources in the image (30),
- wherein the evaluation device (130) is configured to determine whether one of the dominant radiation sources localized in the image (30) stems from the reflection of intrinsic light of the lighting device (110) of the vehicle (10) at a traffic sign (20) and thus whether a traffic sign (20) is present in the image (30) of the surrounding area of the vehicle,
- wherein the evaluation device (130) is configured to determine, by evaluating the image (30), the position of the traffic sign (20) in the surrounding area of the vehicle if the evaluation device (130) has determined that a traffic sign (20) is present as dominant radiation source in the image (30) of the surrounding area of the vehicle,
- wherein the control device has access to traffic sign information from map material of a digital map or from databases for a traffic sign that is present in the recorded scenery,
- wherein the control device (140) is configured to control, in dependence on the classification of the dominant radiation sources in terms of reflection and on the traffic sign information, the lighting device (110) in a manner such that the light emitted by the lighting device (110) in the direction of the traffic sign (20) is changed, as a result of which a reflection of the emitted light at the traffic sign (20) is reduced if it has been determined that a traffic sign (20) is present as dominant radiation source in the image (30) of the surrounding area of the vehicle.

8. Lighting apparatus according to Claim 7, comprising:
- a high beam assistant device (160),
- wherein the evaluation device (130) is configured to classify the dominant radiation sources localized in the image (30) in dependence on the information, provided by the high beam assistant device (160), relating to an oncoming vehicle or a vehicle travelling in front.

9. Motor vehicle having lighting, comprising a lighting apparatus according to either of Claims 7 and 8.

## Revendications

1. Procédé d'adaptation automatique de l'éclairage d'un véhicule à un environnement du véhicule, ledit procédé comprenant les étapes suivantes :
- éclairer l'environnement du véhicule au moyen d'une installation d'éclairage (110) du véhicule (10),
- déterminer une image (30) de l'environnement du véhicule,
- déterminer des intensités lumineuses dans l'image acquise (30),
- localiser des sources de rayonnement dominantes à des emplacements dans l'image (30) si des intensités lumineuses respectives des sources de rayonnement sont plus élevées auxdits emplacements qu'à d'autres emplacements dans l'image (30),
- classer les sources de rayonnement dominantes, situées dans l'image (30), selon la réflexion de la lumière émise par l'installation d'éclairage (110), le classement étant effectué en fonction de l'intensité lumineuse respective des sources de rayonnement dans l'image (30),
- définir si l'une des sources de rayonnement dominantes localisées dans l'image (30) provient de la réflexion de la lumière propre de l'installation d'éclairage (110) du véhicule sur un panneau de signalisation (20) et donc si un panneau de signalisation (20) est présent dans l'image (30) de l'environnement du véhicule,
- déterminer la position du panneau de signalisation (20) dans l'environnement du véhicule par évaluation de l'image (30) lorsqu'il a été défini que le panneau de signalisation (20) est présent comme source de rayonnement dominante dans l'image (30) de l'environnement du véhicule,
- fournir (17) des informations sur les panneaux de signalisation à partir du document cartographique d'une carte numérique ou à partir de bases de données pour un panneau de signalisation (20) présent dans la scène acquise,
- en fonction du classement des sources de rayonnement dominantes selon la réflexion et les informations de panneaux de signalisation, modifier une lumière émise par l'installation d'éclairage (110) du véhicule (10) en direction de la position déterminée du panneau de signalisation (20) dans l'environnement du véhicule (10) de manière à réduire la réflexion de la lumière émise sur le panneau de signalisation s'il a été défini qu'un panneau de signalisation (20) est présent comme source de rayonnement dominante dans l'image (30) de l'environnement du véhicule.

2. Procédé selon la revendication 1, comprenant les étapes suivantes :
- évaluer des informations relatives à un véhicule venant en sens inverse ou un véhicule roulant devant à l'aide d'une installation d'assistance aux feux de route (140),
- classer les sources de rayonnement situées dans l'image (30) en fonction des informations issues de l'installation d'assistance aux feux de route (130).

3. Procédé selon l'une des revendications 1 ou 2, les informations sur les panneaux de signalisation comprenant des informations relatives à la présence d'un panneau de signalisation et à la position et/ou à la classe de panneau et/ou à la taille du panneau et/ou à la réflectance du panneau de signalisation.

4. Procédé selon l'une des revendications 1 à 3, comprenant les étapes suivantes
- déterminer l'intensité lumineuse à l'emplacement du panneau de signalisation (20) localisé dans l'image (30),
- modifier la lumière émise par l'installation d'éclairage (110) en direction de la position déterminée du panneau de signalisation (20) jusqu'à ce que l'intensité lumineuse à l'emplacement du panneau de signalisation (20) localisé dans l'image (30) descende au-dessous d'une valeur seuil.

5. Procédé selon l'une des revendications 1 à 4, comprenant les étapes suivantes :
- déterminer une zone (111, 112) de l'installation d'éclairage (110) dans laquelle la lumière à émettre doit être modifiée afin de réduire la réflexion de la lumière, émise par l'installation d'éclairage (110), sur le panneau de signalisation (20),
- modifier la lumière émise dans la zone déterminée (111, 112) de l'installation d'éclairage (110).

6. Procédé selon l'une des revendications 1 à 5, l'étape de modification de la lumière émise, notamment de réduction de la luminosité de la lumière émise, de manière que l'intensité de la lumière émise soit supérieure à une valeur seuil.

7. Dispositif d'éclairage destiné à un véhicule, ledit dispositif d'éclairage comprenant :
- une installation d'éclairage (110) destinée à émettre de la lumière pour éclairer un environnement du véhicule,
- une installation d'acquisition (120) destinée à acquérir une image (30) de l'environnement du véhicule,
- une installation d'évaluation (130),
- une installation de commande (140) destinée à commander l'installation d'éclairage (110) du véhicule,
- une installation de détermination d'intensité lumineuse (150) destinée à déterminer des intensités lumineuses dans l'image (30),
- l'installation d'évaluation (130) étant conçue pour localiser des sources de rayonnement dominantes à des emplacements dans l'image (30) si les intensités lumineuses respectives sont plus élevées en ces emplacements qu'en d'autres emplacements dans l'image (30),
- l'installation d'évaluation (130) étant conçue pour classer les sources de rayonnement localisées dans l'image (30) selon la réflexion de la lumière émise par l'installation d'éclairage (110) en fonction de l'intensité lumineuse respective des sources de rayonnement dans l'image (30),
- l'installation d'évaluation (130) étant conçue pour définir si l'une des sources de rayonnement dominantes localisées dans l'image (30) provient de la réflexion de la lumière propre de l'installation d'éclairage (110) du véhicule (10) sur un panneau de signalisation (20) et donc si un panneau de signalisation (20) est présent dans l'image (30) de l'environnement du véhicule,
- l'installation d'évaluation (130) étant conçue pour déterminer la position du panneau de signalisation (20) dans l'environnement du véhicule par évaluation de l'image (30) s'il a été défini par l'installation d'évaluation (130) qu'un panneau de signalisation (20) est présent comme source de rayonnement dominante dans l'image (30) de l'environnement du véhicule,
- l'installation de commande ayant accès à des informations sur les panneaux de signalisation à partir d'un document cartographique d'une carte numérique ou à partir de bases de données pour un panneau de signalisation présent dans la scène acquise,
- l'installation de commande (140) étant conçue pour commander l'installation d'éclairage (110) en fonction du classement des sources de rayonnement dominantes selon la réflexion et des informations sur le panneau de signalisation de manière à modifier la lumière émise par l'installation d'éclairage (110) en direction du panneau de signalisation (20), ce qui réduit une réflexion de la lumière émise sur le panneau de signalisation (20) lorsqu'il a été défini qu'un panneau de signalisation (20) est présent comme source de rayonnement dominante dans l'image (30) de l'environnement du véhicule.

8. Dispositif d'éclairage selon la revendication 7, comprenant :
- une installation d'assistance aux feux de route (160),
- l'installation d'évaluation (130) étant conçue pour classer les sources de rayonnement dominantes localisées dans l'image (30) en fonction des informations fournies par l'installation d'assistance aux feux de route (160) et relatives à un véhicule venant en sens inverse ou à un véhicule roulant devant.

9. Véhicule automobile pourvu d'un éclairage, comprenant un dispositif d'éclairage selon l'une des revendications 7 ou 8.
